# EUROPEAN PATENT SPECIFICATION

(11) **EP 0 986 272 B1**
(45) Date of publication and mention of the grant of the patent: **12.10.2005**
(21) Application number: 99306210.8
(22) Date of filing: 05.08.1999
(51) Int. Cl.: H04Q 7/12, H04Q 7/22

(54) **Portable message communication terminal**
Tragbares Endgerät für Nachrichtenkommunikation
Terminal portable pour la communication de messages

(30) Priority: 11.09.1998 JP 25870698
(43) Date of publication of application: 15.03.2000
(73) Proprietor: SHARP KABUSHIKI KAISHA, Osaka 545-8522 (JP)
(72) Inventor: Miki, Kazushige, Nagareyama-shi, Chiba (JP)
(74) Representative: Brown, Kenneth Richard

(56) References cited:
- EP-A- 0 715 442
- WO-A-98/34422
- TROTHA TAYLOR VON D: "THE GSM SHORT MESSAGE SERVICE" PAN-EUROPEAN MOBILE COMMUNICATIONS,GB,LONDON, 1993, pages 72-75, XP000669921 ISSN: 0958-157X

## Description

### BACKGROUND OF THE INVENTION

### 1. Field of the Invention

The present invention relates to a portable communication terminal apparatus, and more particularly, to a portable communication terminal apparatus suitable as a PHS (personal handy-phone system) terminal apparatus capable of receiving a PHS service.

### 2. Description of the Related Art

There has been provided a service in which transmitted textual messages are stored temporarily in a PHS service center and then delivered to PHS terminal apparatuses. A transmitter calls a PHS center and specifies the telephone number of a receiver's PHS terminal apparatus, and then, transmits a textual message. The PHS center notifies the receiver's PHS terminal apparatus that the textual message has been received by the PHS center. The receiver receives the textual message by calling the PHS center by use of the PHS terminal apparatus. Such prior art is disclosed, for example, in Japanese Unexamined Patent Publication JP-A 5-304497(1993).

In this service, since the textual message is temporarily stored in the center, the receiver cannot receive the textual message unless accessing the center. Therefore, it is impossible to perform message transmission and reception in real time. Further, when a transmitter transmits a textual message to the center and when a receiver reads the textual message from the center, the transmitter and the receiver are charged.

To call the center in order to receive the textual message from the center, it is necessary for the receiver to operate a key on the PHS terminal apparatus, which is bothersome. In some PHS services, it is impossible to immediately receive a textual message in real time.

Further, in this prior art, it is impossible to perform textual message transmission and speech in a single operation in the receiver's PHS terminal apparatus.

Another prior art has a function to directly transmit and receive a textual message between PHS terminal apparatuses. The transmitter directly calls the receiver's PHS terminal apparatus by use of a PHS terminal apparatus. After the receiver responds by operating the PHS terminal apparatus, a textual message is transmitted from the transmitter's PHS terminal apparatus to the receiver's PHS terminal apparatus.

In this prior art, since a textual message is directly transmitted and received between PHS terminal apparatuses, it is necessary that the transmitter and receiver of the textual message be in a call established state, that is, in a connected state. Therefore, the transmitter and the receiver are charged when a textual message is transmitted and received. Further, the textual message cannot be transmitted to the receiver unless the receiver responds by operating the PHS terminal apparatus.

Japanese Unexamined Patent Publication JP-A 10-224861 discloses a portable communication terminal apparatus in which when a call arrives, it is determined whether the call is a mail or a voice communication, different patterns of ringing tones are sounded for a mail and for a voice communication so that it can be determined whether the incoming call is a mail or a voice communication, and when a mail arrives, a lamp is blinked to notify the receiver of the arrival of the mail.

The Article "The GSM Short message service" by T Taylor (XP 00669921) discloses particulars about the SMS system.

WO 98/34422 relates to wireless communicators and, in particular, to mobile stations such as those capable of operation with a cellular network.

### SUMMARY OF THE INVENTION

It is desirable to provide a portable communication terminal apparatus in which a textual message can immediately and reliably be transmitted from a transmitter to a receiver by use of, for example, a PHS terminal apparatuses or the like with excellent operability for the user and without the receiver being charged for the reception.

The invention provides a portable communication terminal apparatus comprising:
reception means for receiving a call set-up signal representing that at least a message from a transmitter side is transmitted, and a message without responding to an incoming call;
notification means for providing notification;
a memory for storing a message to be received, after the call set-up signal received by the reception means;
display means; and
control means for causing the notification means to provide notification when the call set-up signal is received by the reception means, and causing the display means to display contents of the call set-up signal and the message stored in the memory.

In using the portable communication terminal apparatus according to the invention, a new air interface apparatus is provided between a base station which is, for example, a conventional PHS center and, for example, the PHS portable communication terminal apparatus of the invention. To transmit a textual message, the transmitter performs a transmission operation by inputting a telephone number of a receiver's portable communication terminal apparatus such as a PHS terminal apparatus, and a textual message to be transmitted, by operating key input means or the like from the transmitter's portable communication terminal apparatus. Consequently, the call set-up signal and the textual message are transmitted from the base station to the receiver's portable communication terminal apparatus, and the call set-up signal and the textual message are received by the reception means of the receiver's portable communication terminal apparatus. When the call set-up signal is received, the control means provides notification by the notification means, and the receiver is notified that the textual message has been received from the transmitter. The notification means may have a structure for producing a sound, a structure for providing visual display by the display means, or a structure for generating motion such as vibrations. The message from the base station has already been received by the reception means and is stored in the memory. The message stored in the memory is displayed by the display means.

Consequently, due to the transmission operation by the transmitter, the receiver is notified of the call set-up signal by the notification means in the portable communication terminal apparatus, and can read the textual message from the transmitter by the display means. Thus, the receiver can receive the message and can be notified of the arrival of the textual message in real time without the need to perform any bothersome key operation, and the receiver is not charged for the reception.

The call set-up signal representing that at least a message is transmitted, and a message are received by the reception means without responding to the incoming call, the notification means performs the notification operation due to the call set-up signal being received, so that the receiver can be notified of the textual message by viewing the display means. Thus, without the receiver operating the portable communication terminal apparatus, the textual message is received and automatically displayed by the display means. Thus, the operability is improved. The message can immediately be received by the transmission from the transmitter, which enables so-called real-time transmission and reception. Further, the receiver is not charged for reception of the message. The received message is automatically displayed as described above, and the display of the message can be continued until the receiver performs, for example, a key operation for changing the display. By doing this, the receiver can be prevented from not noticing the textual message.

It is preferable that the call set-up signal includes a signal representing that speech processing is performed after the message is transmitted, that the apparatus comprises a response switch and speaking means having a microphone and a speaker for speech, and that when a response to the incoming call is performed by an operation of the response switch after the message is displayed by the display means, the control means performs the speech processing by the speech means.

The call set-up signal from the base station not only includes the information representing that a textual message is transmitted but also includes information that the speech processing is performed after textual message transmission. These pieces of information are displayed by the display means. The receiver views the display means of the portable communication terminal apparatus, reads the textual message, and operates the response switch, so that the response to the incoming call is performed to the base station. At this time, the receiver is charged. When the response to the incoming call is performed, the speech processing can be performed by the speech means including the microphone and the speaker, whereby conventional speech can be performed. Consequently, the receiver can read the message displayed by the display means with the portable communication terminal apparatus and can perform the speech processing by operating the response switch. Thus, the operability is excellent. Only by operating the response switch, the receiver can immediately perform speech with the transmitter.

By operating the response switch, the speech processing can be performed continuously from the reception of the message. With this, textual message reception and speech can be performed by a single step of operation. Thus, the operability is excellent.

The invention preferably provides a portable communication terminal wherein said reception means is also operable to note if no message is transmitted,
the portable communication terminal apparatus further comprising:
a response switch;
speech means having a microphone and a speaker for speech;
wherein in the case where no message is transmitted, upon responding to the incoming call by an operation of the response switch, the control means performs a speech processing by the speech means.

The receiver is notified of the reception of the call set-up signal in the notification means not only when the transmitter transmits a textual message but also when the transmitter does not transmit a textual message. The receiver can read the textual message displayed on the display means. When no textual message is transmitted, the display means does not display such a message. By the receiver operating the response switch, the response to the incoming call is performed, so that the receiver is charged. Thereafter, the speech processing is performed by the speech means. Thus, the receiver can read the textual message from the transmitter without performing any operation, and can perform the speech processing by operating the response switch irrespective of the presence or absence of such a message. Thus, the operability is excellent.

Notification by the notification means is performed by the reception of the call set-up signal, so that the receiver can read the message displayed on the display means by viewing the display means. Moreover, irrespective of the presence or absence of such a message, the receiver can perform the speech processing by operating the response switch. Thus, the operability is excellent.

It is preferred that the call setup signal includes an erasure signal representative of erasure of a message, and the control means erases contents stored in the memory when the erasure signal is received.

In the case where a textual message service is provided in which the portable communication terminal apparatus of the invention, for example, a PHS communication terminal apparatus is rented to users who use the portable communication terminal apparatus in a predetermined service area, the service is advantageously carried out when the portable communication terminal apparatus is rented to different users, because the contents of the messages associated with the user who immediately previously uses the portable communication terminal apparatus are erased from the memory. The call set-up signal includes the erasure signal to erase all or a predetermined part of the contents stored in the memory, and the transmitter can erase all or the part of the contents stored in the memory of the receiver by specifying the call set-up signal including the erasure signal and causing the base station to transmit the call set-up station. Thus, in the case where a message service is provided in which the portable communication terminal apparatus is rented to a plurality of different users, the contents stored in the memory can be erased every time a new user starts to use the terminal apparatus, which is convenient.

The call set-up signal includes the erasure signal representative of the erasure of messages stored in the memory, and by such an erasure signal being received, all or a predetermined part of the contents stored in the memory are erased. Consequently, for example, in the case where a rental service is provided by renting the portable communication terminal apparatus of the invention, by performing the memory erasure operation every time the user changes, unnecessary messages are prevented from being left in the memory. Such a memory erasure operation can be performed by remote control without operating, for example, a key of the portable communication terminal apparatus. Thus, the operability is excellent.

Preferably the newly storing a message previous messages stored in the memory are erased in sequence of input in the case where a predetermined capacity of the memory is exceeded.

The memory is configured so that one or a plurality of textual messages can be stored therein, and when the amount of the messages to be stored exceeds a predetermined storage capacity of the memory, an old message is successively erased from an older one and a new message is stored. Thus, the latest textual message can always be stored in the memory.

Since old messages are erased in sequence of input in the case where the capacity of the memory is exceeded, a new message can be stored in the memory with reliability. By surely displaying such a new message by the display means, the receiver can be notified of the message.

It is preferred that the apparatus comprises means for transmitting a message before the response to the incoming call from the receiver side is performed.

After the call set-up signal and a textual message from an air interface apparatus are received, a textual message can be transmitted from the portable communication terminal apparatus performing the reception before an operation of, for example, the response switch is performed. According to this structure, message transmission and reception can be performed without the receiver being charged.

A textual message to the receiver can be transmitted by the transmission means from the transmitter who intends to perform message transmission and/or a speech, so that by a single step of operation, the message transmission and speech can be performed. Thus, the operability is excellent.

### BRIEF DESCRIPTION OF THE DRAWINGS

In order that the present invention be more readily understood, specific embodiments thereof will now be described with reference to the accompanying drawings.
Fig. 1 is a block diagram showing the general structure of an embodiment of the invention;
Fig. 2 is a view of assistance in explaining the general operation of a PHS communication using a portable communication terminal apparatus 10 shown in Fig. 1;
Fig; 3 is a flowchart of assistance in explaining a reception operation in the portable communication terminal apparatus 10 shown in Fig. 1;
Fig. 4 is a view showing the general operation of a PHS service for explaining the operations at steps a2, a3, a10a to a10e and a15 to a20 of Fig. 3;
Fig. 5 is a view of assistance in explaining the general operation of the PHS service in a case where an erasure signal to erase the contents stored in a memory 5 is received in a portable communication terminal apparatus 10; and
Fig. 6 is a view of assistance in explaining the general operation of the PHS service associated with steps a3 and a13 to a20 of Fig. 3.

### DETAILED DESCRIPTION OF THE PREFERRED EMBODIMENTS

Now referring to the drawings, preferred embodiments of the invention are described below.

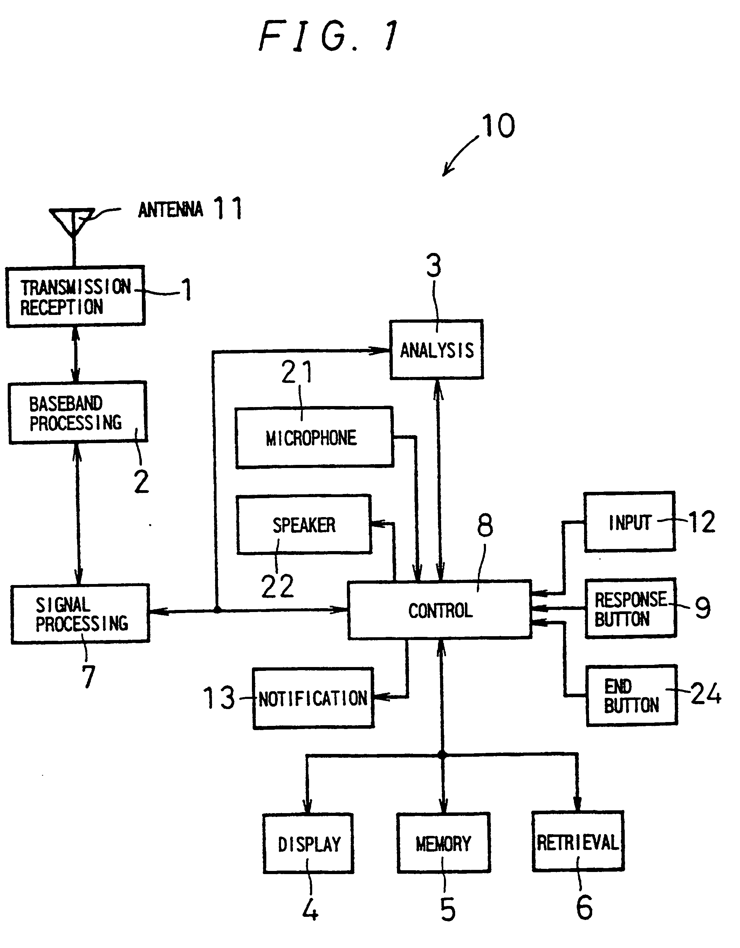

Fig. 1 is a block diagram showing the general structure of an embodiment of the invention. In a PHS portable communication terminal apparatus 10, a transmission and reception circuit 1 is capable of receiving a call originating signal from a transmitter received by an antenna 11, and of transmitting a signal. To the transmission and reception circuit 1, a baseband processing circuit 2 is connected, and processing for transmission and reception is performed. An analysis circuit 3 analyzes a reception signal, and analyzes a call set-up signal and a textual message as described later. A memory 5 is a random access memory. In the memory 5, the received textual message and other signals, for example, the call set-up signal are stored. A retrieval circuit 6 retrieves the received textual message stored in the memory 5. The result of the retrieval is displayed by display means 4. The display means 4 may have a structure for providing visual display realized by liquid crystal or the like, or may have a structure for providing sound display provided with a voice synthesis circuit. A control circuit 8 controls the operations of the analysis circuit 3, a signal processing circuit 7, the memory 5, the retrieval circuit 6 and the display means 4. The signal processing circuit 7 responds to the output of the baseband processing circuit 2, and processes signals such as the call set-up signal and the message. Consequently, as described above, the analysis circuit 3 analyzes information represented by the call set-up signal, that is, that a message has been transmitted or no message has been transmitted, and that speech processing is to be performed, and the operation of the control circuit 8 is performed. The control circuit 8 is provided with key input means having a response button 9 and keys. The signal processing circuit 7 performs signal processing for transmitting a textual message from the portable communication terminal apparatus 10 of the invention, and by the working of the baseband processing circuit 2, a signal can be transmitted from the transmission and reception circuit 1 by wireless. To the processing circuit 8, an end button 24 operated for transmitting a textual message is connected. After the textual message transmission, the end button 24 is operated.

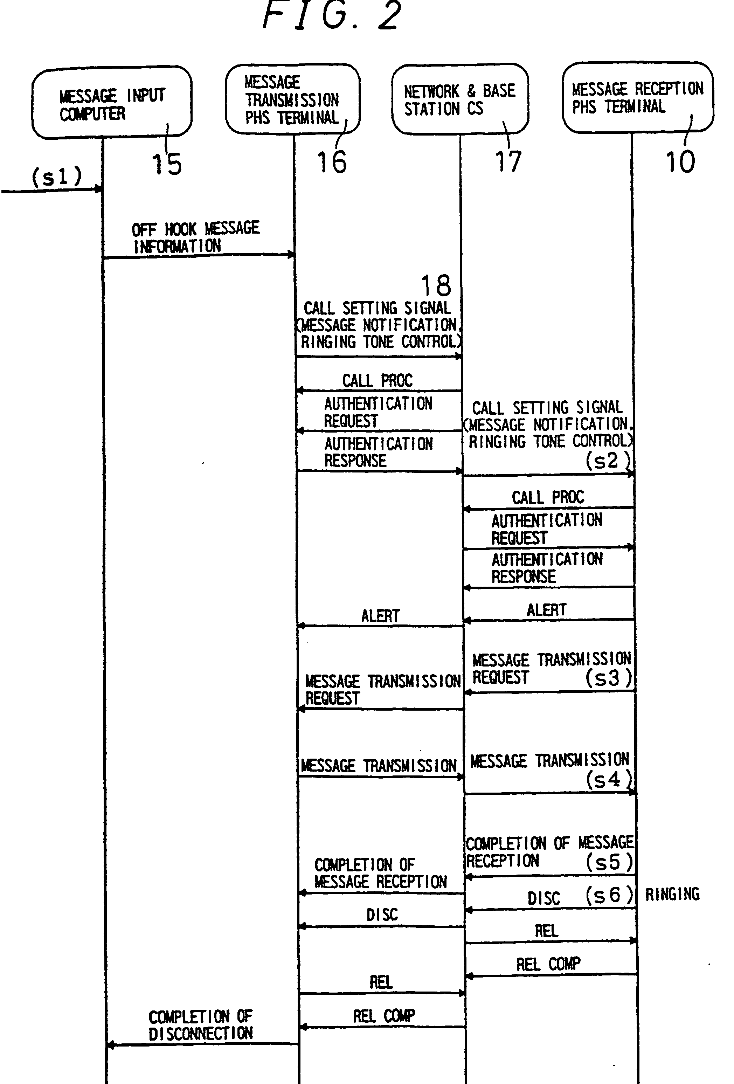

Fig. 2 is a view of assistance in explaining the general operation of a PHS communication using the portable communication terminal apparatus 10 shown in Fig. 1. The transmitter of a textual message produces a message to be transmitted as shown by reference designation s1 by operating keys of a computer 15, the PHS communication terminal apparatus or the like, stores the message in the memory, and originates a call by inputting the telephone number of the receiver's PHS portable communication terminal apparatus to which the message is to be transmitted. When a PHS portable communication terminal apparatus is used for call origination, the message to be transmitted may be produced by use of a message function of the PHS portable communication terminal apparatus, or may be produced on the computer 15. Thus, in Fig. 2, by a call being originated from a PHS portable communication terminal apparatus 16 as shown by reference designation 16, the message is transmitted and a call set-up signal 18 for controlling a ringing tone for notification is transmitted to the PHS network and a base station 17.

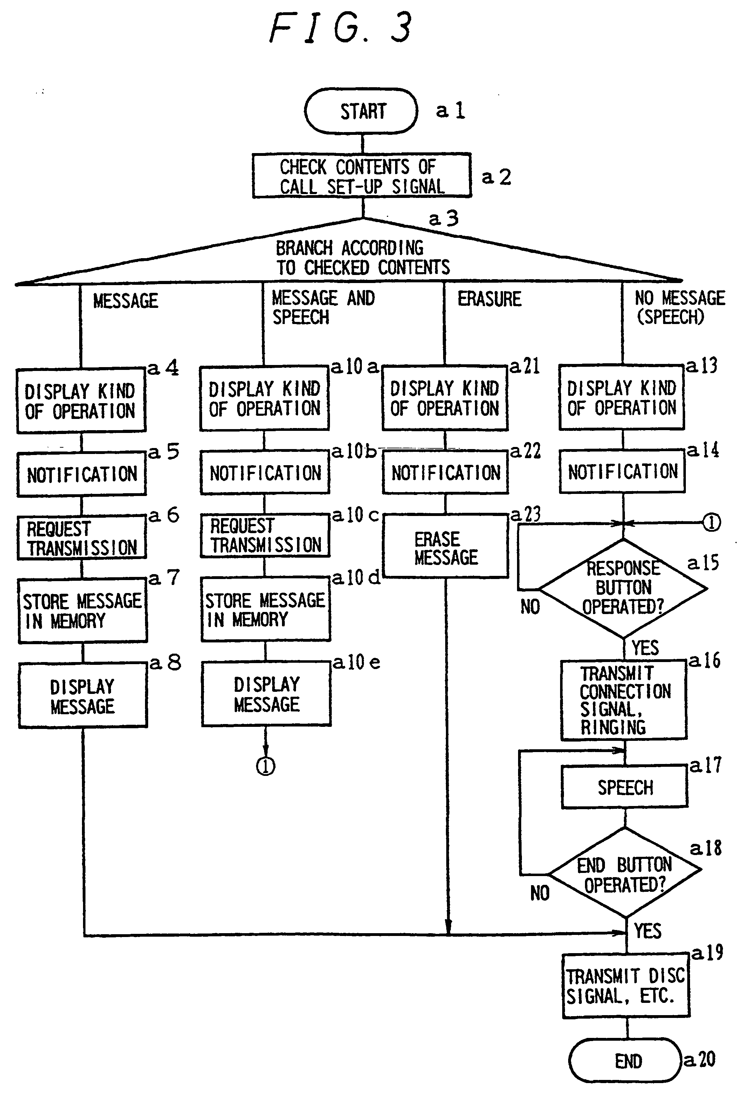

Fig. 3 is a flowchart of assistance in explaining a reception operation in the portable communication terminal apparatus 10 shown in Fig. 1. When the PHS communication terminal apparatus 10 receives the call set-up signal from the base station 17 as shown by reference designation s2 of Fig. 2, the process proceeds from step a1 to step a2 of Fig. 3. At step a2, the reception of the call set-up signal is received by the transmission and reception circuit 1 and supplied to the analysis circuit 3 by way of the baseband processing circuit 2 and the signal processing circuit 7, and it is determined whether the purpose of the reception is only message transmission where speech is not performed as shown at steps a4 to a8, or message transmission and speech as shown at steps a10a to alOe, or message erasure as shown at steps a21 to a23, or speech at steps a13 to a18. At step a3, it is determined from the call set-up signal that a message is present. A signal to perform the notification by notification means 13 is further included, and all or some of such kinds of operations are displayed by the display means 4 at step a4. At step a5, the notification operation by the notification means 13 is performed. The notification means 13 may have a structure for sounding the ringing tone, may have a structure for generating vibrations for notification of the arrival of a call, or may sounds no tone so that no notification is provided. The kind of the notification operation is included in the call set-up signal. The control circuit 8 controls the operation of the notification means 13 in accordance with the contents of the call set-up signal.

Thereafter, a sequence operation associated with authentication between the portable communication terminal apparatus 10 and the base station 17 proceeds in the portable communication terminal apparatus 10. As shown by reference designation s3 of Fig. 2 and by step a6 of Fig. 3, from the receiver's PHS communication terminal apparatus, a signal to request the textual message transfer is transmitted from the transmission and reception circuit 1 by way of the base station 17 to the transmitter's PHS portable communication terminal apparatus 16 to request transmission, thereby notifying the transmitter side that the receiver side is ready for the reception of the message.

Consequently, by the transmitter side being notified that the preparation for the reception of the message has been completed on the receiver side, the message is transmitted from the transmitter's PHS portable communication terminal apparatus 16 as shown by reference designation s4. Consequently, at step a7 of Fig. 3, the received message is analyzed by the analysis circuit 3 and stored in the memory 5 by the working of the control circuit 8. The message thus stored is displayed by the display means 4 at step a8. When all of the message is received by the receiver's PHS portable communication terminal apparatus 10 and the reception is completed as shown by reference designation s5 of Fig. 2, a signal including the information representative of the completion of the reception is transmitted by the transmission and reception circuit 1 to the transmitter's PHS portable communication terminal apparatus 16 by way of the base station 17. At this time, to notify the PHS user that a message has been received, the notification means 13 sounds a ringing tone for a predetermined time. The ringing tone is provided in accordance with ringing tone control information of the received call set-up signal shown by reference designation s2. For the control of the ringing tone, the ringing can be stopped before the predetermined time has elapsed by the user performing an operation of the input means 12. Such a notification operation is as described in association with the step a5.

The memory 5 is capable of electrical writing and reading, and may be, for example, an EEPROM (electrically erasable programmable read only memory). Consequently, even after the power source such as a battery is exhausted, the stored contents can be held. The memory 5 may be realized by a random access memory or the like.

After the ringing tone and the like is controlled at reference designation s6 of Fig. 2, sequence operations between the receiver's PHS portable communication terminal apparatus 10 and the base station 17 and between the base station 17 and the transmitter's PHS portable communication terminal apparatus 16 proceed. Thereafter, disconnection processing of wireless link is automatically performed to end the communication.

In the above-described embodiment, when a message is received, a connection signal is not transmitted from the PHS portable communication terminal apparatus 10 between the reception of the call set-up signal and the message, and the disconnection of the wireless link, so that the receiver is not charged.

Moreover, in the above-described embodiment, a reception completion signal to notify that all of the message has been received is generated from the receiver's PHS portable communication terminal apparatus 10 as shown by reference designation s5 of Fig. 2, the reception completion signal is transmitted from the base station 17 to the transmitter's PHS portable communication terminal apparatus 16 as described above, and the transmitter can be notified that the reception of the message on the receiver side has been completed in the transmitter's PHS portable communication terminal apparatus, so that the message can be transmitted with reliability. At the end of the signal including the call set-up signal and the message transmitted from the base station 17 to the receiver's PHS portable communication terminal apparatus 10, a signal representative of the end of transmission is included. Based on this, the reception completion signal is generated.

At step a3 of Fig. 3, when it is determined that the call set-up signal not only includes the message but also includes a signal representing that the speech processing is performed after the message transmission, the process proceeds to the steps a10a to a10e. The operations at steps a10a to a10e are similar to the operations at the steps a4 to a8. That is, the textual message transmitted from the transmitter side by way of the base station 17 is stored in the memory 5 and displayed by the display means 4, and this is notified by the notification means 13. Then, the process proceeds to step al5 to determine whether the response button 9 is operated or not. When the response button 9 is operated, the connection signal is transmitted at step a16.

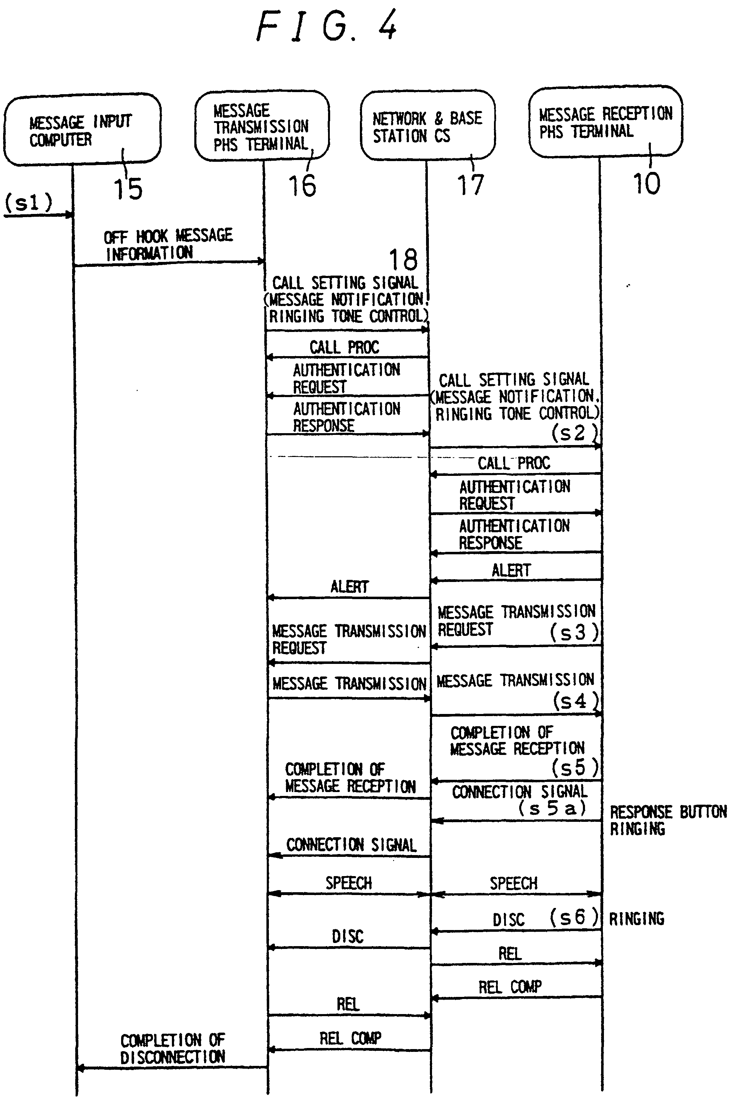

Fig. 4 is a view showing the general operation of a PHS service for explaining the operations at steps a2, a3, a10a to a10e and a15 to a20 of Fig. 3. During this operation, as shown by reference designation s5a of Fig. 4, a connection signal is transmitted from the receiver's PHS portable communication terminal apparatus 10 and is received by the transmitter's PHS portable communication terminal apparatus 16 by way of the base station 17. Thus, at step a17 of Fig. 3, the speech can be performed by use of a microphone 21 and a speaker 22 provided in the control circuit 8. When it is determined that the end button 24 is operated at step a18, a sequence operation between the base station 17 and the transmitter's PHS portable communication terminal apparatus 16 is performed thereafter as shown by reference designation s6 of Fig. 4. This is as shown at step a19 of Fig. 3. Thus, a series of operations are finished at step a20.

Thus, the receiver of the message can automatically receive the message without operating the PHS portable communication terminal apparatus 10 of the invention. The received message is automatically stored in the memory 5 and displayed by the display means 4. This display is continued until the user operates the input means 12, for example, to change the display. Consequently, the user can be prevented from not noticing the message displayed by the display means4.

In the memory 5, a plurality of messages can be stored. When a message to be stored is inputted beyond the capacity of the memory 5, the oldest one of the messages stored in the memory 5 is erased and the new message is stored. Thus, the latest message can always be stored in the memory 5.

When a signal representative of message erasure is included in the transmitted call set-up signal, the process proceeds from step a3 to step a21, where the kind of the operation represented by the call set-up signal is displayed by the display means 4.

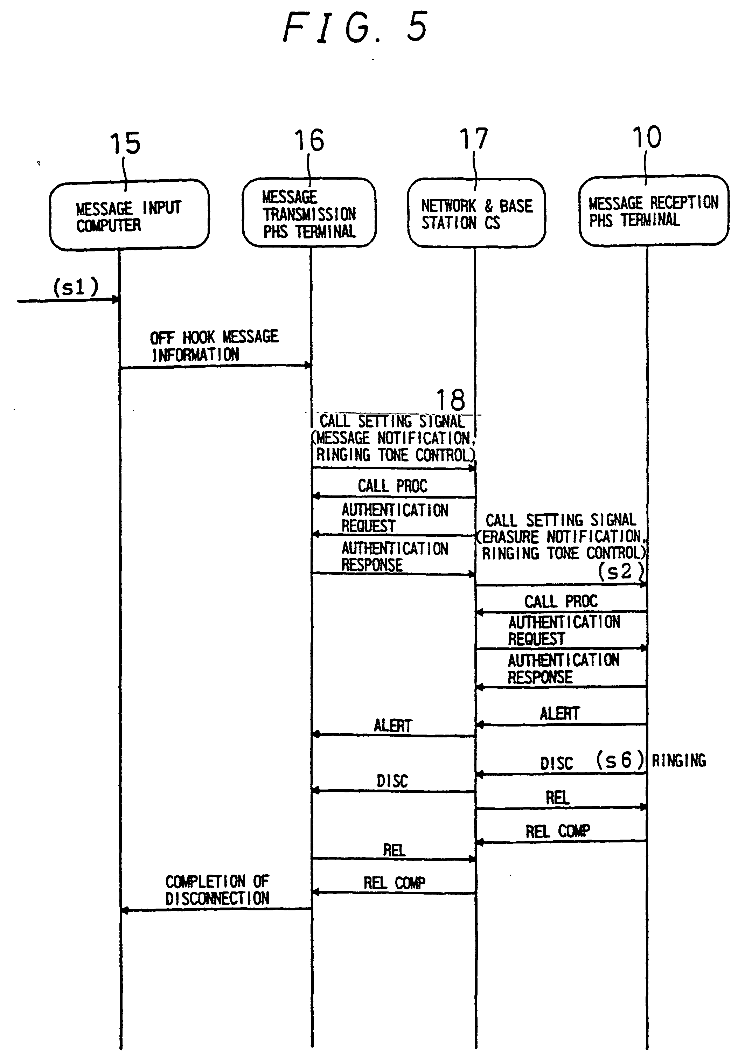

Fig. 5 is a view of assistance in explaining the general operation of the PHS service in a case where an erasure signal to erase the contents stored in the memory 5 is received in the portable communication terminal apparatus 10. As shown by reference designation s2, it is determined through analysis that the call set-up signal includes the signal representative of erasure as described above. At step a22 of Fig. 3, the notification means 13 is operated to perform the notification operation. At step a23, the contents stored in the memory 5 are all erased. Thereby, for example, when a rental service is provided by renting the PHS portable communication terminal apparatus 10 of the invention, it can be performed to erase all of the contents stored in the memory 5 every time the user changes and to prevent unnecessary stored contents being left, by a remote control, that is, by operating the PHS portable communication terminal apparatus 16.

When it is determined at step a3 of Fig. 3 that no message to be received is present in the call set-up signal, at the next step a13, the kind of the operation represented by the call set-up signal is displayed by the display means 4. For example, when the signal representing that the speech is performed is included, this is displayed by the display means 4. At step a14, it is notified by the notification means 13 that the call set-up signal has been received. Thereafter, when the user operates the response button 9 at step al5, the operations at steps a16 to a20 are performed as described above, which enables a speech operation.

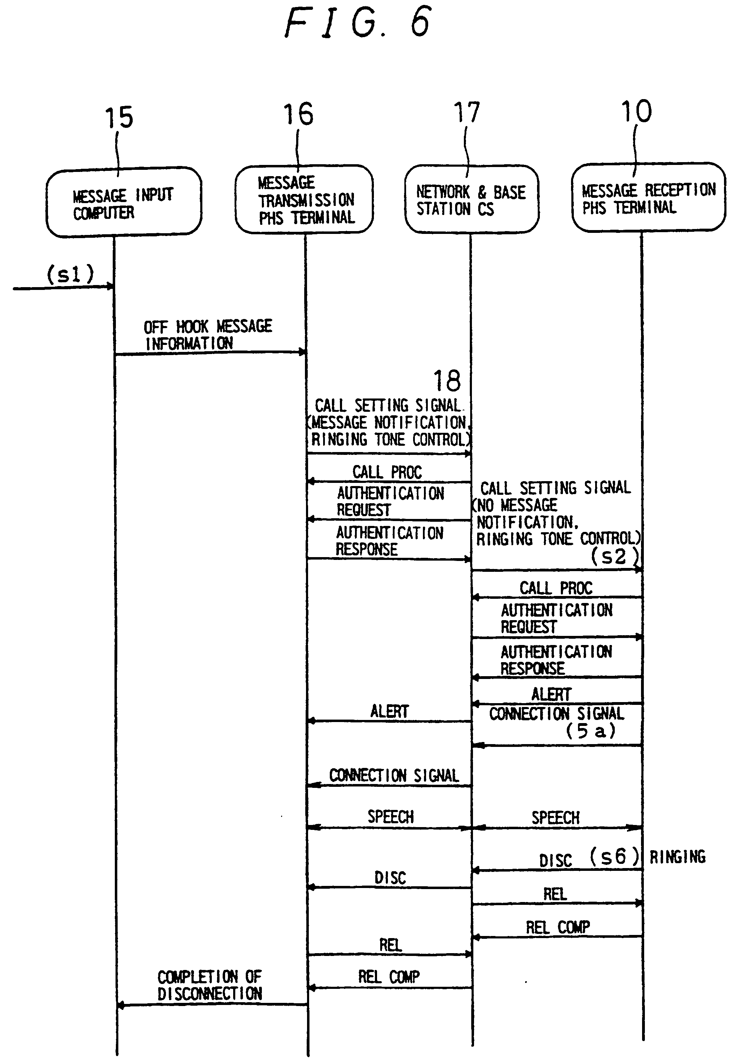

Fig. 6 is a view of assistance in explaining the general operation of the PHS service associated with steps a3 and a13 to a20 of Fig. 3. As shown by the reference designation s2, the call set-up signal includes a signal representative of the absence of message. The operations other than this are similar to those described above.

The invention can be carried out not only in association with the PHS service but also in a wide range for other communications.

## Claims

1. A portable communication terminal apparatus (10) comprising:
reception means (1) for receiving a call set-up signal representing that at least a message from a transmitter side is transmitted, and a message without responding to an incoming call;
notification means (13) for providing notification;
a memory (5) for storing a message to be received, after the call set-up signal received by the reception means;
display means (4); and
control means (18) for causing the notification means (13) to provide notification when the call set-up signal is received by the reception means (1), and causing the display means (4) to display contents of the call set-up signal and the message stored in the memory (5).

2. The portable communication terminal apparatus (10) of claim 1, wherein the call set-up signal includes a signal representing that speech processing is performed after the message is transmitted,
the apparatus comprising:
a response switch (9); and
speaking means having a microphone (21) and a speaker (22) for speech,
wherein when a response to the incoming call is performed by an operation of the response switch (9) after the message is displayed by the display means (4), the control means (18) performs the speech processing by the speech means.

3. A portable communication terminal apparatus (10) according to claim 1, wherein said reception means is also operable to note if no message is transmitted,
the portable communication terminal apparatus further comprising:
a response switch (9);
speech means having a microphone (21) and a speaker (22) for speech;
wherein in the case where no message is transmitted, upon responding to the incoming call by an operation of the response switch (9), the control means (18) performs a speech processing by the speech means.

4. The portable communication terminal apparatus (10) of claim 1, wherein the call set-up signal includes an erasure signal representative of message erasure, and the control means (18) erases contents stored in the memory (5) when the erasure signal is received.

5. The portable communication terminal apparatus (10) of claim 3, wherein the call set-up signal includes an erasure signal representative of message erasure, and the control means (18) erases contents stored in the memory (5) when the erasure signal is received.

6. The portable communication terminal apparatus (10) of claim 1, wherein in newly storing a message previous messages stored in the memory (5) are erased in sequence of input in the case where a predetermined capacity of the memory is exceeded.

7. The portable communication terminal apparatus (10) of claim 3, wherein in newly storing a message previous messages stored in the memory (5) are erased in sequence of input in the case where a predetermined capacity of the memory is exceeded.

8. The portable communication terminal apparatus (10) of claim 1, comprising means (1) for transmitting a message before the response to the incoming call from the receiver side is performed.

9. The portable communication terminal apparatus (10) of claim 3, comprising means (1) for transmitting a message before the response to the incoming call from the receiver side is performed.

## Patentansprüche

1. Tragbares Kommunikations-Endgerät (10) mit:
- einer Empfangseinrichtung (1) zum Empfangen eines Anrufaufbausignals, das repräsentiert, dass mindestens eine Meldung von einer Senderseite gesendet wird, und einer Meldung ohne Antwort auf einen eingehenden Anruf;
- einer Benachrichtungseinrichtung (13), um für Benachrichtigung zu sorgen;
- einem Speicher (5) zum Speichern einer zu empfangenden Meldung nach dem durch die Empfangseinrichtung empfangenen Anrufaufbausignal;
- einer Anzeigeeinrichtung (4) und
- einer Steuerungseinrichtung (18), die die Benachrichtigungseinrichtung (13) dazu veranlasst, eine Benachrichtigung zu liefern, wenn das Anrufaufbausignal von der Empfangseinrichtung (1) empfangen wird, und um dafür zu sorgen, dass die Anzeigeeinrichtung (4) den Anzeigeinhalt des Anrufaufbausignals und die im Speicher (5) gespeicherte Meldung anzeigt.

2. Tragbares Kommunikations-Endgerät (10) nach Anspruch 1, bei dem das Anrufaufbausignal ein Signal enthält, das anzeigt, dass nach dem Senden der Meldung eine Sprachverarbeitung ausgeführt wird, mit:
- einem Antwortschalter (9); und
- einer Sprecheinrichtung mit einem Mikrofon (21) und einem Lautsprecher (22) für Sprache;
- wobei dann, wenn durch Bedienen des Antwortschalters (9) nach dem Anzeigen der Meldung durch die Anzeigeeinrichtung (4) eine Antwort auf den eingehenden Anruf ausgeführt wird, die Steuerungseinrichtung (18) durch die Sprecheinrichtung eine Sprachverarbeitung ausführt.

3. Tragbares Kommunikations-Endgerät (10) nach Anspruch 1, bei dem die Empfangseinrichtung auch so betreibbar ist, dass sie eine Benachrichtigung liefert, wenn keine Meldung gesendet wird, wobei dieses tragbare Kommunikations-Endgerät ferner Folgendes aufweist:
- einen Antwortschalter (9);
- eine Sprecheinrichtung mit einem Mikrofon (21) und einem Lautsprecher (22) für Sprache;
- wobei die Steuerungseinrichtung (18) dann, wenn keine Meldung gesendet wird, auf das Antworten auf den eingehenden Anruf durch Bedienen des Antwortschalters (9) hin, eine Sprachverarbeitung durch die Sprecheinrichtung ausführt.

4. Tragbares Kommunikations-Endgerät (10) nach Anspruch 2, bei dem das Anrufaufbausignal ein Löschsignal enthält, das das Meldung einer Löschung anzeigt, und die Steuerungseinrichtung (18) im Speicher (5) gespeicherten Inhalt löscht, wenn das Löschsignal empfangen wird.

5. Tragbares Kommunikations-Endgerät (10) nach Anspruch 3, bei dem das Anrufaufbausignal ein Löschsignal enthält, das das Meldung einer Löschung anzeigt, und die Steuerungseinrichtung (18) im Speicher (5) gespeicherten Inhalt löscht, wenn das Löschsignal empfangen wird.

6. Tragbares Kommunikations-Endgerät (10) nach Anspruch 1, bei dem beim neuen Einspeichern einer Meldung zuvor im Speicher (5) abgespeicherte Meldungen in der Reihenfolge der Eingabe gelöscht werden, wenn ein vorbestimmtes Speichervermögen des Speichers überschritten wird.

7. Tragbares Kommunikations-Endgerät (10) nach Anspruch 3, bei dem beim neuen Einspeichern einer Meldung zuvor im Speicher (5) abgespeicherte Meldungen in der Reihenfolge der Eingabe gelöscht werden, wenn ein vorbestimmtes Speichervermögen des Speichers überschritten wird.

8. Tragbares Kommunikations-Endgerät (10) nach Anspruch 1, mit einer Einrichtung (1) zum Senden einer Meldung bevor die Antwort auf den eingehenden Anruf von der Empfängerseite ausgeführt wird.

9. Tragbares Kommunikations-Endgerät (10) nach Anspruch 3, mit einer Einrichtung (1) zum Senden einer Meldung bevor die Antwort auf den eingehenden Anruf von der Empfängerseite ausgeführt wird.

## Revendications

1. Appareil terminal de communication portable (10) comprenant :
un moyen de réception (1) destiné à recevoir un signal d'établissement d'appel représentant le fait qu'au moins un message est émis par un côté émetteur, et un message sans répondre à un appel entrant ;
un moyen de notification (13) destiné à assurer une notification ;
une mémoire (5) destinée à stocker un message qui doit être reçu, après le signal d'établissement d'appel reçu par le moyen de réception ;
un moyen d'affichage (4) ; et
un moyen de commande (18) destiné à solliciter le moyen de notification (13) pour assurer une notification lorsque le signal d'établissement d'appel est reçu par le moyen de réception (1), et à solliciter le moyen d'affichage (4) pour afficher le contenu du signal d'établissement d'appel et le message stocké dans la mémoire (5).

2. Appareil terminal de communication portable (10) selon la revendication 1, dans lequel le signal d'établissement d'appel comprend un signal représentant le fait que le traitement vocal est mis en oeuvre après que le message ait été émis,
l'appareil comprenant :
un commutateur de réponse (9) ; et
un moyen vocal comportant un microphone (21) et un haut-parleur (22) destinés à la voix,
dans lequel, lorsqu'une réponse à l'appel entrant est mise en oeuvre par une opération du commutateur de réponse (9), après affichage du message par le moyen d'affichage (4), le moyen de commande (18) procède au traitement vocal avec le moyen vocal.

3. Appareil terminal de communication portable (10) selon la revendication 1, dans lequel ledit moyen de réception est également susceptible d'être mis en oeuvre pour noter le fait qu'aucun message n'est émis, l'appareil terminal de communication portable comprenant en outre :
un commutateur de réponse (9) ;
un moyen vocal comportant un microphone (21) et un haut-parleur (22) destinés à la voix,
dans lequel, dans le cas où aucun message n'est émis, après réponse à l'appel entrant par une mise en fonctionnement du commutateur de réponse (9), le moyen de commande (18) met en oeuvre un traitement vocal avec le moyen vocal.

4. Appareil terminal de communication portable (10) selon la revendication 1, dans lequel le signal d'établissement d'appel comprend un signal d'effacement représentatif d'un effacement de message et le moyen de commande (18) efface le contenu stocké en mémoire (5) lorsque le signal d'effacement est reçu.

5. Appareil terminal de communication portable (10) selon la revendication 3, dans lequel le signal d'établissement d'appel comprend un signal d'effacement représentatif d'un effacement de message et le moyen de commande (18) efface le contenu stocké en mémoire (5) lorsque le signal d'effacement est reçu.

6. Appareil terminal de communication portable (10) selon la revendication 1, dans lequel, lors d'un nouveau stockage d'un message, les messages précédents stockés dans la mémoire (5) sont effacés dans l'ordre d'entrée en cas de dépassement d'une capacité prédéterminée de la mémoire.

7. Appareil terminal de communication portable (10) selon la revendication 3, dans lequel, lors d'un nouveau stockage d'un message, les messages précédents stockés dans la mémoire (5) sont effacés dans l'ordre d'entrée en cas de dépassement d'une capacité prédéterminée de la mémoire.

8. Appareil terminal de communication portable (10) selon la revendication 1, comprenant un moyen (1) destiné à émettre un message avant la mise en oeuvre de la réponse à l'appel entrant par le côté récepteur.

9. Appareil terminal de communication portable (10) selon la revendication 3, comprenant un moyen (1) destiné à émettre un message avant la mise en oeuvre de la réponse à l'appel entrant par le côté récepteur.
